# EUROPÄISCHE PATENTSCHRIFT

(11) **EP 2 997 804 B1**
(45) Veröffentlichungstag und Bekanntmachung des Hinweises auf die Patenterteilung: **03.07.2019**
(21) Anmeldenummer: 15185905.5
(22) Anmeldetag: 18.09.2015
(51) Int. Cl.: A01B 59/00

(54) **HUBSTREBE FÜR EINEN DREIPUNKTGERÄTEANBAU EINES LANDWIRTSCHAFTLICHEN TRAKTORS**
LIFTING STRUT FOR A THREE POINT DEVICE ATTACHMENT OF AN AGRICULTURAL TRACTOR
COLONNE DE LEVAGE D'UNE PRISE DE FORCE A TROIS POINTS D'UN TRACTEUR AGRICOLE

(30) Priorität: 22.09.2014 DE 102014219065
(43) Veröffentlichungstag der Anmeldung: 23.03.2016
(73) Patentinhaber: Deere & Company, Moline, IL 61265 (US)
(72) Erfinder: Heitlinger, Martin, 76684 Östringen (DE)
(74) Vertreter: Dehnhardt, Florian Christopher

(56) Entgegenhaltungen:
- EP-A1- 0 695 655
- EP-A1- 1 438 886
- EP-A1- 1 606 984
- EP-A1- 2 130 420
- DE-A1- 3 906 099
- DE-C1- 19 605 560

## Beschreibung

Die Erfindung betrifft einen Dreipunktgeräteanbau eines landwirtschaftlichen Traktors. Ein Dreipunktgeräteanbau ist zum Beispiel aus der EP1438886A bekannt.

Zur vereinfachten Anbringung unterschiedlicher landwirtschaftlicher Anbaugeräte sind landwirtschaftliche Traktoren typischerweise mit einem Dreipunktgeräteanbau ausgestattet. Der Dreipunktgeräteanbau umfasst einen bezüglich seiner Länge verstellbaren Oberlenker sowie zwei starre Unterlenker. Zum Anheben bzw. Absenken eines an dem Dreipunktgeräteanbau anbringbaren landwirtschaftlichen Anbaugeräts sind die Ober-und Unterlenker vertikal verschwenkbar im Heckbereich des landwirtschaftlichen Traktors befestigt, wobei die Verschwenkung nach Maßgabe einer entsprechenden Fahreranforderung mittels eines an den Unterlenkern angreifenden Hubmechanismus erfolgt. Der Hubmechanismus umfasst hydraulisch betätigbare Hubarme, deren Schwenkbewegung mittels zugehöriger Hubstreben auf die Unterlenker übertragen wird.

Im Allgemeinen ist in einem unteren Bereich des Dreipunktgeräteanbaus zusätzlich ein Zugmaul zur Anbringung eines Anhängers vorgesehen. Um ein seitliches Hin- und Herschwenken einer in das Zugmaul eingehängten Anhängerdeichsel zu ermöglichen, sind die Unterlenker aus dem Schwenkbereich der Anhängerdeichsel heraus in eine angehobene Stellung zu verbringen. Da sich die Unterlenker aufgrund baulicher Gegebenheiten des Hubmechanismus, insbesondere aufgrund des zur Verfügung stehenden Verstellwegs bzw. des spezifischen Anbringungsorts von zur hydraulischen Betätigung der Hubarme verwendeten Hydraulikzylindern lediglich in begrenztem Umfang anheben lassen, ergeben sich aufgrund des insofern begrenzten seitlichen Freiraums im Bereich der Anhängerdeichsel entsprechende Einschränkungen hinsichtlich des zulässigen Knickwinkels und damit der Wendigkeit eines aus landwirtschaftlichem Traktor und Anhänger bestehenden Fahrzeuggespanns.

Angesichts dessen ist es Aufgabe der vorliegenden Erfindung, eine Möglichkeit zur Verbesserung der Wendigkeit eines mit einem Dreipunktgeräteanbau ausgestatteten landwirtschaftlichen Traktors insbesondere bei der Durchführung von Transportfahrten mit einem Anhänger zu schaffen.

Diese Aufgabe wird durch eine Hubstrebe für einen Dreipunktgeräteanbau eines landwirtschaftlichen Traktors mit den Merkmalen des Patentanspruchs 1 gelöst.

Die erfindungsgemäße Hubstrebe umfasst einen ersten Strebenabschnitt zur Anbringung an einem Unterlenker des Dreipunktgeräteanbaus und einen zweiten Strebenabschnitt zur Anbringung an einem Hubarm des Dreipunktgeräteanbaus, wobei die beiden Strebenabschnitte derart längsverschieblich ineinander gelagert sind, dass diese entgegen einer rückstellenden Kraft eines Federspeichers in einen die Hubstrebe verlängernden ausgelenkten Zustand verbringbar sind.

Umgekehrt bedeutet dies, dass die Hubstrebe bei fehlender äußerer Last unter der Wirkung der rückstellenden Kraft des Federspeichers in einem verkürzten (Ruhe-) Zustand verharrt, der es erlaubt, einen an der Hubstrebe angebrachten Unterlenker mittels des hydraulisch betätigbaren Hubarms über sein übliches Maß hinaus anzuheben. Der dadurch geschaffene zusätzliche seitliche Freiraum im Bereich der Anhängerdeichsel führt zu einer Erhöhung des zulässigen Knickwinkels und damit zu einer entsprechenden Verbesserung der Wendigkeit eines aus landwirtschaftlichem Traktor und Anhänger bestehenden Fahrzeuggespanns.

Soll anstelle eines Anhängers ein am Dreipunktgeräteanbau angebrachtes landwirtschaftliches Anbaugerät betrieben werden, so ist die Hubstrebe aus ihrem verkürzten in den ausgelenkten Zustand zu verbringen, da sich das landwirtschaftliche Anbaugerät andernfalls mittels der Unterlenker nicht weit genug absenken ließe. Wird daher ein landwirtschaftliches Anbaugerät in die Unterlenker des Dreipunktgeräteanbaus eingehängt, so bewirkt dessen Gewicht, dass die Hubstrebe beim Anheben der Hubarme zunächst entgegen der rückstellenden Kraft des Federspeichers durch Auslenkung der beiden Strebenabschnitte auseinandergeschoben wird. Dieser Vorgang setzt sich bis zum Erreichen eines innerhalb der Hubstrebe vorgesehenen Anschlags fort. Dieser ist derart gewählt, dass die Hubstrebe bei Erreichen des Anschlags ihren zum Betrieb des Dreipunktgeräteanbaus vorgesehenen ausgelenkten Zustand einnimmt.

Vorteilhafte Ausgestaltungen der erfindungsgemäßen Hubstrebe gehen aus den Unteransprüchen hervor.

Vorzugsweise ist die rückstellende Federkraft durch entsprechende Dimensionierung des Federspeichers derart bemessen, dass die beiden Strebenabschnitte ausschließlich dann in den ausgelenkten Zustand verbringbar sind, wenn auf die Hubstrebe eine für einen Betrieb des Dreipunktgeräteanbaus charakteristische äußere Last einwirkt. Auf diese Weise lässt sich sicherstellen, dass nicht bereits das Gewicht eines an der Hubstrebe angebrachten Unterlenkers zu einer unerwünschten Auslenkung der beiden Strebenabschnitte führt.

Es ist denkbar, dass die Hubstrebe einen mechanisch wirkenden Federspeicher aufweist. Hierbei kann an einem der beiden Strebenabschnitte ein erstes Widerlager und an dem anderen der beiden Strebenabschnitte ein gegenüber dem ersten Widerlager längsverschieblich angeordnetes zweites Widerlager vorgesehen sein, wobei die beiden Widerlager zur Bildung des Federspeichers gegenläufige Anschläge für eine dazwischenliegende Druckfeder bilden. Ein derartiger Federspeicher zeichnet sich aufgrund seiner einfachen Bauart durch besondere Robustheit aus, wobei sich die auf die beiden Strebenabschnitte ausgeübte rückstellende Kraft durch Verwendung von Druckfedern entsprechender Federkonstante wunschgemäß anpassen lässt.

Alternativ ist es möglich, dass die Hubstrebe einen hydraulisch wirkenden Federspeicher umfasst. In diesem Fall kann einer der beiden Strebenabschnitte ein als Hydraulickolben ausgebildetes erstes Ende und der andere der beiden Strebenabschnitte ein als Zylindergehäuse ausgebildetes zweites Ende aufweisen, wobei der Hydraulikkolben innerhalb des Zylindergehäuses derart längsverschieblich angeordnet ist, dass dieser zur Bildung des Federspeichers einen mit einem Blasenspeicher kommunizierenden Ringraum bildet. Der Blasenspeicher umfasst typischerweise einen aus Stahl bestehenden Druckkörper, der mittels einer nachgiebigen Membran in eine mit dem Ringraum kommunizierende erste Arbeitskammer sowie in eine stickstoffgefüllte zweite Arbeitskammer unterteilt ist. Da sich der Arbeitsdruck innerhalb der zweiten Arbeitskammer durch Veränderung der Stickstoffbefüllung weitgehend frei variieren lässt, ist die auf die beiden Strebenabschnitte ausgeübte rückstellende Kraft ohne aufwändige Demontage des Federspeichers über einen weiten Bereich anpassbar.

Um bei der Durchführung von Transportfahrten mit angehobenen Unterlenkern ein fahrtbedingt angeregtes Einfedern der Hubstrebe und damit ein mögliches Wippen eines an den Unterlenkern eingehängten landwirtschaftlichen Anbaugeräts zu unterbinden, ist es vorstellbar, dass die beiden Strebenabschnitte in ihrem ausgelenkten Zustand mittels eines Sicherungselements arretierbar sind.

Bei dem Sicherungselement kann es sich im einfachsten Fall um einen abnehmbaren Sicherungsbolzen handeln. Der Sicherungsbolzen wird insbesondere quer zur Längsachse der Hubstrebe durch die beiden Strebenabschnitte hindurchgesteckt. Die beiden Strebenabschnitte können hierzu eine im ausgelenkten Zustand miteinander fluchtende, in einem an der Hubstrebe von außen leicht zugänglichen Bereich ausgebildete Bolzenaufnahmeöffnung aufweisen. Abweichend davon kann die Bolzenaufnahmeöffnung ausschließlich in einer der beiden Strebenabschnitte vorgesehen sein, wobei ein von dieser aufgenommener, sich quer zur Längsachse der Hubstrebe erstreckender Sicherungsbolzen vorzugsweise einen stirnseitigen Anschlag für eine zwischen den beiden Strebenabschnitten auftretende Einfederbewegung bildet.

Ferner ist es denkbar, als Sicherungselement anstelle eines Sicherungsbolzens eine dem ersten Strebenabschnitt zugeordnete Schraubhülse vorzusehen, mittels derer sich eine der beiden Strebenabschnitte gegenüber dem anderen der beiden Strebenabschnitte im ausgelenkten Zustand derart verspannen lässt, dass eine Einfederbewegung zwischen den beiden Strebenabschnitten blockiert wird.

Die Verwendung eines Sicherungsbolzens oder einer Schraubhülse ist gleichermaßen in Verbindung mit einem mechanisch wirkenden wie auch mit einem hydraulisch wirkenden Federspeicher möglich.

Im Falle eines hydraulisch wirkenden Federspeichers besteht zudem die Möglichkeit, dass ein als Ventil ausgebildetes Sicherungselement zur Unterbrechung einer zwischen dem Ringraum und dem Blasenspeicher verlaufenden Hydraulikleitung vorgesehen ist. Das Ventil kann beispielsweise als manuell oder elektrisch betätigbares Absperrventil in Gestalt eines Kugelhahns oder eines Magnetventils ausgebildet sein.

Befindet sich die am Dreipunktgeräteanbau angebrachte Hubstrebe in ihrem ausgelenkten Zustand, so besteht bei abgenommenem landwirtschaftlichen Anbaugerät aufgrund der dann fehlenden äußeren Last die Möglichkeit, dass die Hubstrebe samt Unterlenker beim Lösen des Sicherungselements unter der Wirkung der rückstellenden Kraft des Federspeichers unvermittelt in ihren verkürzten Zustand zurückschnellt. Es ist daher von Vorteil, wenn die Arretierung entweder ausschließlich sukzessive lösbar oder bei fehlender äußerer Last blockiert ist.

Im Falle eines als Sicherungsbolzen ausgebildeten Sicherungselements kann zu diesem Zweck eine entlang des Umfangs des Sicherungsbolzens verlaufende Ausnehmung vorgesehen sein, in die ein im Bereich der Bolzenaufnahmeöffnung ausgebildeter Vorsprung unter der Wirkung der rückstellenden Kraft des Federspeichers derart gepresst wird, dass ein Herausziehen des Sicherungsbolzens bei fehlender äußerer Last verhindert wird. Hierbei sei angemerkt, dass es nicht zwingend notwendig ist, den Sicherungsbolzen mit einer derartigen Ausnehmung auszustatten, denn die aufgrund der rückstellenden Kraft des Federspeichers zu überwindenden Reibungskräfte innerhalb der Bolzenaufnahmeöffnung führen bereits dazu, dass sich der Sicherungsbolzen zumindest von Hand nicht ohne Weiteres aus der Bolzenaufnahmeöffnung herausziehen lässt. Die an dem Sicherungsbolzen vorgesehene Ausnehmung gewährleistet jedoch in Verbindung mit dem im Bereich der Bolzenaufnahmeöffnung ausgebildeten Vorsprung, dass ein Lösen der Arretierung selbst unter Zuhilfenahme von Werkzeug zerstörungsfrei nicht möglich ist.

Bei Verwendung eines manuell oder elektrisch betätigbaren Absperrventils besteht die Möglichkeit, ein Drosselelement in die zwischen Ringraum und Blasenspeicher verlaufende Hydraulikleitung einzufügen, mittels dessen sich bei fehlender äußerer Last verhindern lässt, dass die Hubstrebe beim Öffnen des Ventils infolge eines schlagartigen Druckabbaus in Richtung des Blasenspeichers unvermittelt in den verkürzten Zustand zurückschnellt.

Die erfindungsgemäße Hubstrebe wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen jeweils in Schnittdarstellung:
- Fig. 1: ein erstes Ausführungsbeispiel der erfindungsgemäßen Hubstrebe für einen Dreipunktgeräteanbau eines landwirtschaftlichen Traktors,
- Fig. 2: das in Fig. 1 wiedergegebene Ausführungsbeispiel der erfindungsgemäßen Hubstrebe in ausgelenktem Zustand,
- Fig. 3: ein zweites Ausführungsbeispiel der erfindungsgemäßen Hubstrebe für einen Dreipunktgeräteanbau eines landwirtschaftlichen Traktors, und
- Fig. 4: das in Fig. 3 wiedergegebene Ausführungsbeispiel der Hubstrebe in ausgelenktem Zustand.

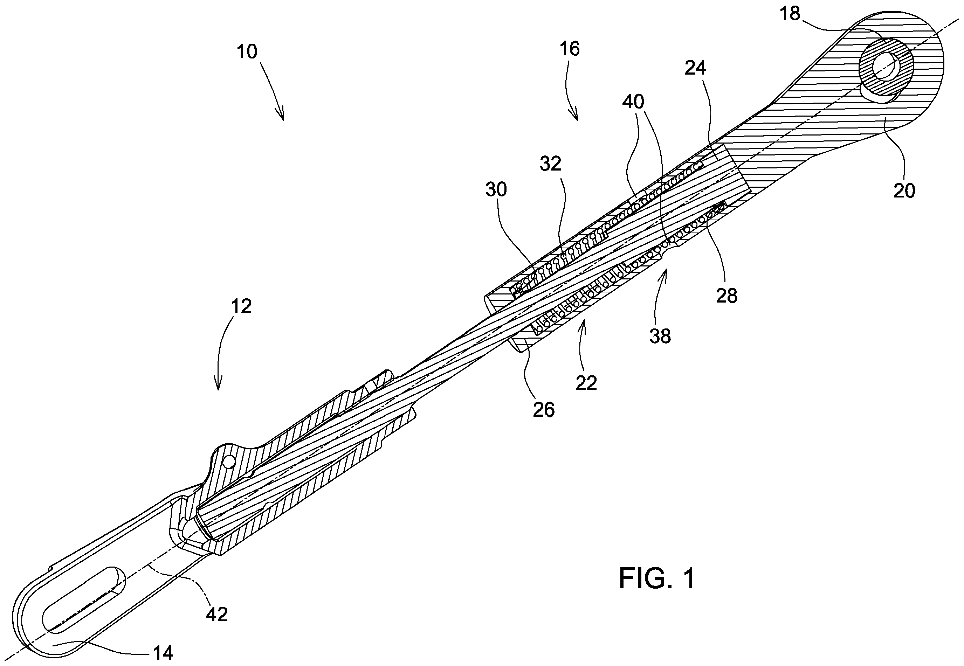

Fig. 1 zeigt ein erstes Ausführungsbeispiel der erfindungsgemäßen Hubstrebe für einen nicht dargestellten Dreipunktgeräteanbau eines landwirtschaftlichen Traktors.

Die Hubstrebe 10 umfasst einen ersten Strebenabschnitt 12 mit einem ösenförmigen ersten Befestigungsende 14 zur Anbringung an einem Unterlenker des Dreipunktgeräteanbaus sowie einen zweiten Strebenabschnitt 16 mit einem als Kugelauge 18 ausgebildeten zweiten Befestigungsende 20 zur Anbringung an einem hydraulisch betätigbaren Hubarm des Dreipunktgeräteanbaus.

Der hydraulisch betätigbare Hubarm ist Bestandteil eines von dem Dreipunktgeräteanbau umfassten Hubmechanismus, der dazu dient, den hydraulisch betätigbaren Hubarm nach Maßgabe einer entsprechenden Fahreranforderung durch Ansteuerung eines zugehörigen Hydraulikzylinders zu verschwenken sowie die Schwenkbewegung mittels der Hubstrebe 10 auf den Unterlenker des Dreipunktgeräteanbaus zu übertragen.

Beispielsgemäß weist die Hubstrebe 10 einen mechanisch wirkenden Federspeicher 22 auf, bei dem an dem ersten Strebenabschnitt 12 ein erstes Widerlager 24 und an dem zweiten Strebenabschnitt 16 ein gegenüber dem ersten Widerlager 24 längsverschieblich angeordnetes zweites Widerlager 26 vorgesehen ist, wobei die beiden Widerlager 24, 26 zur Bildung des Federspeichers 22 gegenläufige Anschläge 28, 30 für eine dazwischenliegende Druckfeder 32 bilden. Hierbei drängt die von der Druckfeder 32 auf die beiden Anschläge 28, 30 ausgeübte rückstellende Kraft die beiden Strebenabschnitte 12, 16 in den in Fig. 1 dargestellten verkürzten Zustand.

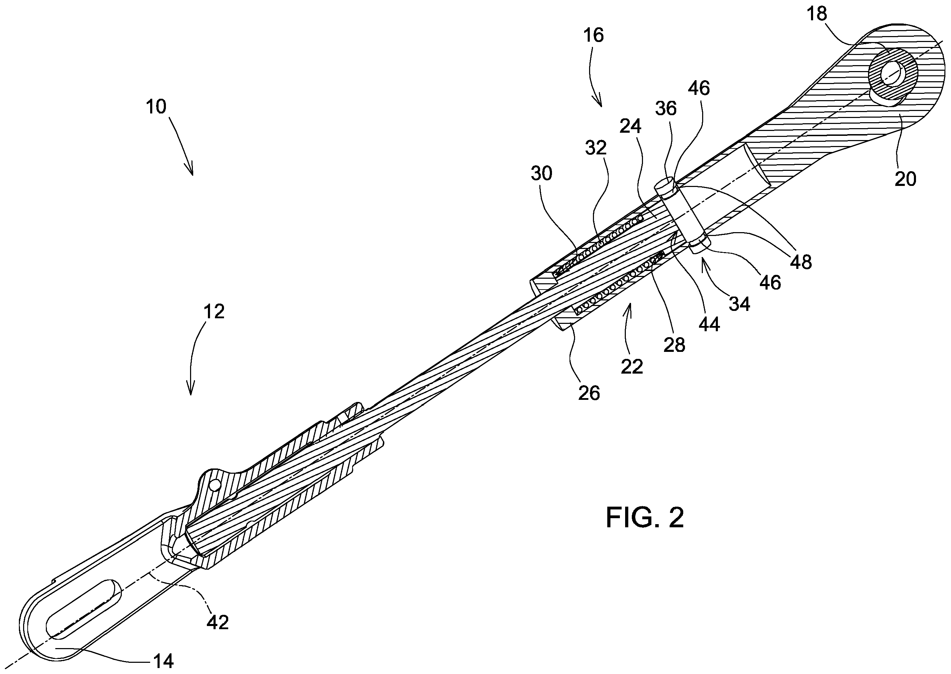

Die beiden derart längsverschieblich ineinander gelagerten Strebenabschnitte 12, 16 lassen sich entgegen der rückstellenden Kraft der Druckfeder 32 in einen die Hubstrebe 10 verlängernden ausgelenkten Zustand verbringen. Dieser ausgelenkte Zustand ist in Fig. 2 wiedergegeben.

Die rückstellende Federkraft ist durch entsprechende Wahl der Federkonstante der Druckfeder 32 derart bemessen, dass die beiden Strebenabschnitte 12, 16 ausschließlich dann in den ausgelenkten Zustand verbringbar sind, wenn auf die Hubstrebe 10 eine für einen Betrieb des Dreipunktgeräteanbaus charakteristische äußere Last einwirkt. Die Federkonstante der verwendeten Druckfeder 32 liegt hierzu im Bereich von 3 ... 4 N·mm⁻¹, wodurch sichergestellt ist, dass nicht bereits das Gewicht eines an der Hubstrebe 10 angebrachten Unterlenkers zu einer unerwünschten Auslenkung der beiden Strebenabschnitte 12, 16 führt. Hierbei hat sich in der Praxis eine Federkonstante von 3,82 N·mm⁻¹ besonders bewährt.

Die beiden Strebenabschnitte 12, 16 sind im ausgelenkten Zustand mittels eines Sicherungselements 34 arretierbar. Bei dem Sicherungselement 34 handelt es sich im vorliegenden Fall um einen abnehmbaren Sicherungsbolzen 36. Der zweite Strebenabschnitt 16 weist eine in einem von außen leicht zugänglichen Bereich 38 ausgebildete Bolzenaufnahmeöffnung 40 auf. Der von der Bolzenaufnahmeöffnung 40 aufgenommene, sich quer zur Längsachse 42 der Hubstrebe 10 erstreckende Sicherungsbolzen 36 bildet hierbei einen stirnseitigen Anschlag 44 für eine zwischen den beiden Strebenabschnitten 12, 16 auftretende Einfederbewegung.

Des Weiteren ist eine entlang des Umfangs des Sicherungsbolzens 36 verlaufende Ausnehmung 46 vorgesehen. In die Ausnehmung 46 wird ein im Bereich der Bolzenaufnahmeöffnung 40 ausgebildeter Vorsprung 48 unter der Wirkung der rückstellenden Kraft der Druckfeder 32 derart gepresst, dass ein Herausziehen des Sicherungsbolzens 36 bei fehlender äußerer Last nicht möglich ist.

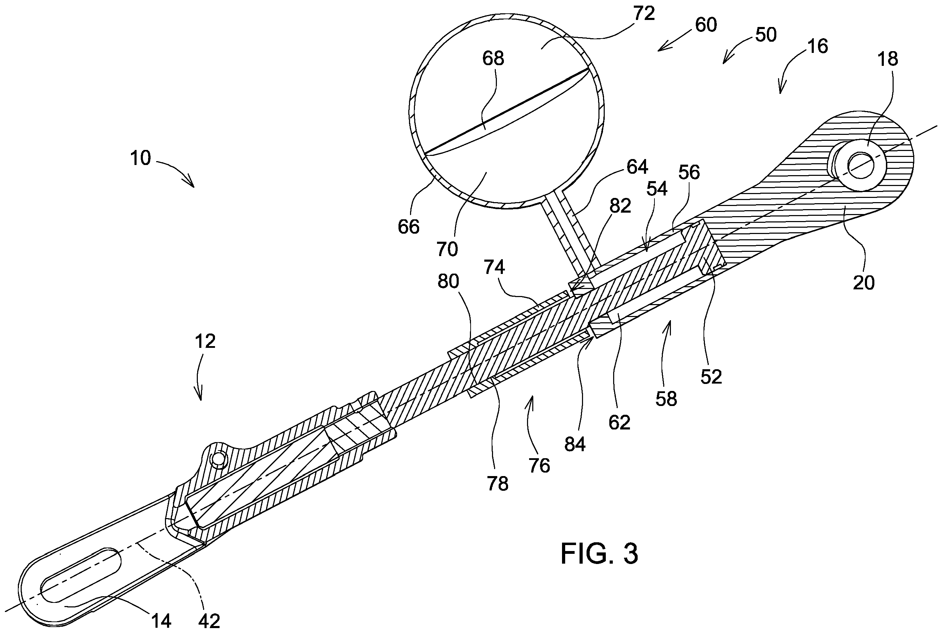

Fig. 3 zeigt ein zweites Ausführungsbeispiel der erfindungsgemäßen Hubstrebe. Dieses unterscheidet sich von dem in Fig. 1 wiedergegebenen ersten Ausführungsbeispiel lediglich im Hinblick auf die Ausgestaltung des Federspeichers sowie des Sicherungselements.

Demgemäß umfasst die Hubstrebe 10 anstelle eines mechanisch wirkenden einen hydraulisch wirkenden Federspeicher 50, bei dem der erste Strebenabschnitt 12 ein als Hydraulikkolben 52 ausgebildetes erstes Ende 54 und der zweite Strebenabschnitt 16 ein als Zylindergehäuse 56 ausgebildetes zweites Ende 58 aufweist, wobei der Hydraulikkolben 52 innerhalb des Zylindergehäuses 56 derart längsverschieblich angeordnet ist, dass dieser einen mit einem Blasenspeicher 60 kommunizierenden Ringraum 62 bildet. Der über eine Hydraulikleitung 64 mit dem Ringraum 62 verbundene Blasenspeicher 60 umfasst einen aus Stahl bestehenden Druckkörper 66, der mittels einer nachgiebigen Membran 68 in eine mit dem Ringraum 62 kommunizierende erste Arbeitskammer 70 sowie eine stickstoffgefüllte zweite Arbeitskammer 72 unterteilt ist.

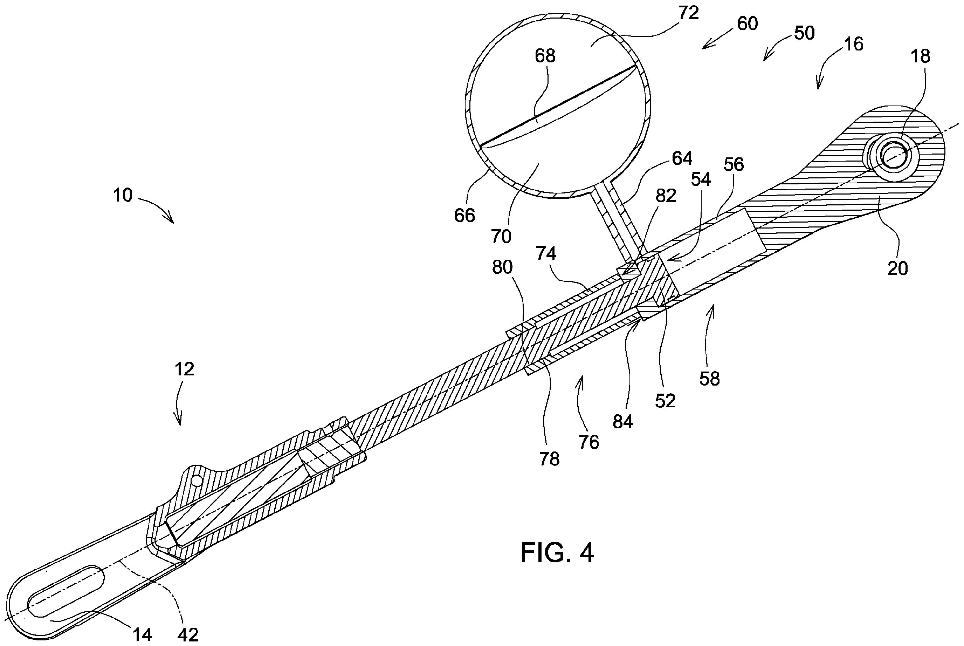

Die beiden derart längsverschieblich ineinander gelagerten Strebenabschnitte 12, 16 lassen sich entgegen der rückstellenden Kraft des Blasenspeichers 60 in einen die Hubstrebe 10 verlängernden ausgelenkten Zustand verbringen. Dieser ausgelenkte Zustand ist in Fig. 4 wiedergegeben. Die rückstellende Federkraft ist durch entsprechende Stickstoffbefüllung der zweiten Arbeitskammer 72 des Blasenspeichers 60 derart bemessen, dass die beiden Strebenabschnitte 12, 16 ausschließlich dann in den ausgelenkten Zustand verbringbar sind, wenn auf die Hubstrebe 10 eine für einen Betrieb des Dreipunktgeräteanbaus charakteristische äußere Last einwirkt.

Eine dem ersten Strebenabschnitt 12 zugeordnete Schraubhülse 74 bildet ein Sicherungselement 76 zur Arretierung der beiden Strebenabschnitte 12, 16 in ihrem ausgelenkten Zustand. Mittels der Schraubhülse 74 lässt sich der erste Strebenabschnitt 12 gegenüber dem zweiten Strebenabschnitt 16 im ausgelenkten Zustand derart verspannen, dass eine Einfederbewegung zwischen den beiden Strebenabschnitten 12, 16 blockiert wird. Genauer gesagt dient ein entlang des ersten Strebenabschnitts 12 verlaufendes Außengewinde 78 der Führung der Schraubhülse 74, wobei die Schraubhülse 74 ein mit dem Außengewinde 78 korrespondierendes Innengewinde 80 aufweist, mittels dessen sich eine stirnseitige Abflachung 82 durch Drehen der Schraubhülse 74 gegen einen am zweiten Strebenabschnitt 12 umlaufenden Absatz 84 in Anschlag bringen lässt.

Gemäß einer nicht dargestellten Ausgestaltung der Hubstrebe 10 besteht zudem die Möglichkeit, dass anstelle der Schraubhülse 74 ein als Ventil ausgebildetes Sicherungselement zur Unterbrechung der zwischen dem Ringraum 62 und dem Blasenspeicher 60 verlaufenden Hydraulikleitung 64 vorgesehen ist. Das Ventil ist beispielsweise als manuell oder elektrisch betätigbares Absperrventil in Gestalt eines Kugelhahns oder eines Magnetventils ausgebildet. Ein in die Hydraulikleitung 64 eingefügtes Drosselelement verhindert bei fehlender äußerer Last, dass die Hubstrebe 10 beim Öffnen des Ventils infolge eines schlagartigen Druckabbaus in Richtung des Blasenspeichers 60 unvermittelt in den verkürzten Zustand zurückschnellt.

## Patentansprüche

1. Dreipunktgeräteanbau für einen landwirtschaftlichen Traktor, mit einem Oberlenker sowie zwei Unterlenkern zur Anbringung eines landwirtschaftlichen Anbaugeräts, wobei jedem der Unterlenker eine Hubstrebe (10) zugeordnet ist, wobei die Hubstrebe (10) mittels eines ersten Strebenabschnitts (12) an einem der beiden Unterlenker und mittels eines zweiten Strebenabschnitts (16) an einem hydraulisch betätigbaren Hubarm des Dreipunktgeräteanbaus angebracht ist, wobei die beiden Strebenabschnitte (12, 16) derart längsverschieblich ineinander gelagert sind, dass diese entgegen einer rückstellenden Kraft eines Federspeichers (22, 50) in einen die Hubstrebe (10) verlängernden ausgelenkten Zustand verbringbar sind, **dadurch gekennzeichnet, dass** die Hubstrebe (10) bei fehlender äußerer Last unter der Wirkung der rückstellenden Kraft des Federspeichers (22, 50) in einem demgegenüber verkürzten Ruhezustand verharrt.

2. Dreipunktgeräteanbau nach Anspruch 1, **dadurch gekennzeichnet, dass** die rückstellende Federkraft derart bemessen ist, dass die beiden Strebenabschnitte (12, 16) ausschließlich dann in den ausgelenkten Zustand verbringbar sind, wenn auf die Hubstrebe (10) eine für einen Betrieb des Dreipunktgeräteanbaus charakteristische äußere Last einwirkt.

3. Dreipunktgeräteanbau nach Anspruch 1 oder 2, **dadurch gekennzeichnet, dass** an einem der beiden Strebenabschnitte (12) ein erstes Widerlager (24) und an dem anderen der beiden Strebenabschnitte (16) ein gegenüber dem ersten Widerlager (24) längsverschieblich angeordnetes zweites Widerlager (26) vorgesehen ist, wobei die beiden Widerlager (24, 26) zur Bildung des Federspeichers (22) gegenläufige Anschläge (28, 30) für eine dazwischenliegende Druckfeder (32) bilden.

4. Dreipunktgeräteanbau nach Anspruch 1 oder 2, **dadurch gekennzeichnet, dass** einer der beiden Strebenabschnitte (12) ein als Hydraulikkolben (52) ausgebildetes erstes Ende (54) und der andere der beiden Strebenabschnitte (16) ein als Zylindergehäuse (56) ausgebildetes zweites Ende (58) aufweist, wobei der Hydraulikkolben (52) innerhalb des Zylindergehäuses (56) derart längsverschieblich angeordnet ist, dass dieser zur Bildung des Federspeichers (50) einen mit einem Blasenspeicher (60) kommunizierenden Ringraum (62) bildet.

5. Dreipunktgeräteanbau nach einem der Ansprüche 1 bis 4, **dadurch gekennzeichnet, dass** die beiden Strebenabschnitte (12, 16) in ihrem ausgelenkten Zustand mittels eines Sicherungselements (34, 76) arretierbar sind.

6. Dreipunktgeräteanbau nach Anspruch 5, **dadurch gekennzeichnet, dass** es sich bei dem Sicherungselement (34) um einen abnehmbaren Sicherungsbolzen (36) handelt.

7. Dreipunktgeräteanbau nach Anspruch 5, **dadurch gekennzeichnet, dass** als Sicherungselement (76) eine dem ersten Strebenabschnitt (12) zugeordnete Schraubhülse (74) vorgesehen ist, mittels derer sich der erste Strebenabschnitt (12) gegenüber dem zweiten Strebenabschnitt (16) im ausgelenkten Zustand derart verspannen lässt, dass eine Einfederbewegung zwischen den beiden Strebenabschnitten (12, 16) blockiert wird.

8. Dreipunktgeräteanbau nach Anspruch 4 in Verbindung mit Anspruch 5, **dadurch gekennzeichnet, dass** ein als Ventil ausgebildetes Sicherungselement zur Unterbrechung einer zwischen dem Ringraum (62) und dem Blasenspeicher (60) verlaufenden Hydraulikleitung (64) vorgesehen ist.

9. Dreipunktgeräteanbau nach einem der Ansprüche 5 bis 8, **dadurch gekennzeichnet, dass** die Arretierung ausschließlich sukzessive lösbar oder bei fehlender äußerer Last blockiert ist.

## Claims

1. Three point device attachment for an agricultural tractor, with an upper link and two lower links for attaching an agricultural attachment device, wherein each of the lower links is assigned a lifting strut (10), wherein the lifting strut (10) is attached to one of the two lower links by means of a first strut portion (12) and to a hydraulically actuable lifting arm of the three point device attachment by means of a second strut portion (16), wherein the two strut portions (12, 16) are mounted in a longitudinally displaceable manner in each other in such a way that they can be brought counter to a resetting force of a spring accumulator (22, 50) into a deflected state extending the lifting strut (10), **characterized in that**, under the action of the resetting force of the spring accumulator (22, 50), the lifting strut (10) remains in a by contrast shortened inoperative state in the event of a lack of external load.

2. Three point device attachment according to Claim 1, **characterized in that** the resetting spring force is dimensioned in such a manner that the two strut portions (12, 16) can be brought into the deflected state exclusively when an external load characteristic of an operation the three point device attachment acts on the lifting strut (10).

3. Three point device attachment according to Claim 1 or 2, **characterized in that** a first abutment (24) is provided on one of the two strut portions (12) and a second abutment (26) which is arranged in a longitudinally displaceable manner in relation to the first abutment (24) is provided on the other of the two strut portions (16), wherein the two abutments (24, 26) for forming the spring accumulator (22) form opposed stops (28, 30) for a compression spring (32) located in-between.

4. Three point device attachment according to Claim 1 or 2, **characterized in that** one of the two strut portions (12) has a first end (54) in the form of a hydraulic piston (52) and the other of the two strut portions (16) has a second end (58) in the form of a cylinder housing (56), wherein the hydraulic piston (52) is arranged within the cylinder housing (56) in a longitudinally displaceable manner such that, in order to form the spring accumulator (50), said hydraulic piston forms an annular space (62) which communicates with a bladder accumulator (60).

5. Three point device attachment according to one of Claims 1 to 4, **characterized in that** the two strut portions (12, 16) can be locked in their deflected state by means of a securing element (34, 76).

6. Three point device attachment according to Claim 5, **characterized in that** the securing element (34) is a removable securing bolt (36).

7. Three point device attachment according to Claim 5, **characterized in that** the securing element (76) provided is a screw sleeve (74) which is assigned to the first strut portion (12) and by means of which the first strut portion (12) can be braced in relation to the second strut portion (16) in the deflected state such that a compression movement between the two strut portions (12, 16) is blocked.

8. Three point device attachment according to Claim 4 in conjunction with Claim 5, **characterized in that** a securing element in the form of a valve is provided for interrupting a hydraulic line (64) running between the annular space (62) and the bladder accumulator (60).

9. Three point device attachment according to one of Claims 5 to 8, **characterized in that** the locking is exclusively successively releasable or blocked in the event of the absence of an external load.

## Revendications

1. Dispositif d'attelage à trois points pour un tracteur agricole, comprenant une barre supérieure ainsi que deux barres inférieures pour le montage d'un outil agricole porté, une chandelle de levage (10) étant associée à chacune des barres inférieures, la chandelle de levage (10) étant montée sur l'une des deux barres inférieures au moyen d'une première partie de chandelle (12) et sur un bras de levage, pouvant être actionné de manière hydraulique, du dispositif d'attelage à trois points au moyen d'une deuxième partie de chandelle (16), les deux parties de chandelle (12, 16) étant montées de manière déplaçable longitudinalement l'une dans l'autre de telle sorte que celles-ci puissent être amenées dans un état déployé prolongeant la chandelle de levage (10) à l'encontre d'une force de rappel d'un accumulateur à ressort (22, 50), **caractérisé en ce qu'**en l'absence de charge extérieure, la chandelle de levage (10) demeure dans un état de repos en revanche raccourci sous l'effet de la force de rappel de l'accumulateur à ressort (22, 50).

2. Dispositif d'attelage à trois points selon la revendication 1, **caractérisé en ce que** la force de ressort de rappel est dimensionnée de telle sorte que les deux parties de chandelle (12, 16) ne puissent être amenées à l'état déployé que lorsqu'une charge extérieure caractéristique d'un fonctionnement du dispositif d'attelage à trois points agit sur la chandelle de levage (10).

3. Dispositif d'attelage à trois points selon la revendication 1 ou 2, **caractérisé en ce qu'**un premier contre-appui (24) est prévu sur l'une des deux parties de chandelle (12) et un deuxième contre-appui (26) disposé de manière déplaçable longitudinalement par rapport au premier contre-appui (24) est prévu sur l'autre des deux parties de chandelle (16), les deux contre-appuis (24, 26) formant des butées (28, 30) se déplaçant en sens contraires pour un ressort de compression (32) situé entre elles pour former l'accumulateur à ressort (22).

4. Dispositif d'attelage à trois points selon la revendication 1 ou 2, **caractérisé en ce que** l'une des deux parties de chandelle (12) comprend une première extrémité (54) réalisée sous forme de piston hydraulique (52) et l'autre des deux parties de chandelle (16) comprend une deuxième extrémité (58) réalisée sous forme de corps de cylindre (56), le piston hydraulique (52) étant disposé de manière déplaçable longitudinalement à l'intérieur du corps de cylindre (56), de telle sorte que celui-ci forme un espace annulaire (62) communiquant avec un accumulateur à vessie (60) pour former l'accumulateur à ressort (50).

5. Dispositif d'attelage à trois points selon l'une des revendications 1 à 4, **caractérisé en ce que** les deux parties de chandelle (12, 16) peuvent être verrouillées dans leur état déployé au moyen d'un élément de fixation (34, 76).

6. Dispositif d'attelage à trois points selon la revendication 5, **caractérisé en ce que** l'élément de fixation (34) est un boulon de fixation (36) amovible.

7. Dispositif d'attelage à trois points selon la revendication 5, **caractérisé en ce qu'**une douille filetée (74) associée à la première partie de chandelle (12) est prévue en tant élément de fixation (76), douille filetée au moyen de laquelle la première partie de chandelle (12) peut être serrée par rapport à la deuxième partie de chandelle (16) dans l'état déployé de telle sorte qu'un déplacement de compression entre les deux parties de chandelle (12, 16) soit bloqué.

8. Dispositif d'attelage à trois points selon la revendication 4 en association avec la revendication 5, **caractérisé en ce qu'**un élément de fixation réalisé sous forme de soupape est prévu pour interrompre une conduite hydraulique (64) s'étendant entre l'espace annulaire (62) et l'accumulateur à vessie (60).

9. Dispositif d'attelage à trois points selon l'une des revendications 5 à 8, **caractérisé en ce que** le verrouillage peut être libéré exclusivement progressivement ou est bloqué en l'absence de charge extérieure.
